# EUROPEAN PATENT APPLICATION

(11) **EP 4 752 516 A1**
(43) Date of publication of application: **03.06.2026**
(21) Application number: 25199257.4
(22) Date of filing: 01.09.2025
(51) Int. Cl.: G01M 11/08, G01G 19/03, G01G 19/12, G01G 19/44, G01M 17/007

(54) **AN INSPECTION APPARATUS CONFIGURED TO PERFORM AN INSPECTION OF A VEHICLE**

(30) Priority: 29.11.2024 JP 2024208193
(71) Applicant: TOYOTA JIDOSHA KABUSHIKI KAISHA, Toyota-shi, Aichi-ken 471-8571 (JP)
(72) Inventor: TANAKA, Yohei, Toyota-shi, Aichi-ken, 471-8571 (JP)
(74) Representative: TBK

(57) **Abstract**

A system includes: an inspection apparatus configured to perform an inspection of a vehicle; a detection unit configured to detect load information related to a load applied to an occupant seat section of the vehicle during the inspection; and an output unit configured to output a result of the inspection by the inspection apparatus in association with the load information detected by the detection unit.

## Description

### BACKGROUND OF THE INVENTION

### 1. Field of the Invention

The present disclosure relates to systems.

### 2. Description of Related Art

Japanese Unexamined Patent Application Publication (Translation of PCT Application) No. 2017-538619 (JP 2017-538619 A) discloses a technique of causing a vehicle to travel autonomously or through remote control during a vehicle manufacturing process. Various inspections are performed during the manufacturing process.

### SUMMARY OF THE INVENTION

Among the various inspections, the results of inspections such as side slip inspection and brake inspection may vary depending on the presence or absence of occupants in the vehicle, namely the presence of absence of load. There is a demand for a system that can verify that an inspection was performed with an appropriate load applied.

The present disclosure can be implemented in the following aspects.
(1) One aspect of the present disclosure provides a system. The system includes: an inspection apparatus configured to perform an inspection of a vehicle; a detection unit configured to detect load information related to a load applied to an occupant seat section of the vehicle during the inspection; and an output unit configured to output a result of the inspection by the inspection apparatus in association with the load information detected by the detection unit.
   In this system, the output unit is configured to output the result of the inspection by the inspection apparatus in association with the load information detected by the detection unit. It is therefore possible to verify whether the inspection was performed with an appropriate load applied.
(2) In the system of the above aspect, the occupant seat section may include a seat on which an occupant of the vehicle is seated. The detection unit may include a seat sensor provided in the seat and configured to detect the load information related to a load applied to the seat.
   In the system of this aspect, the detection unit includes the seat sensor provided in the seat and configured to detect the load information related to the load applied to the seat. It is therefore possible to verify whether the inspection was performed with an appropriate load applied to the seat.
(3) In the system of the above aspect, the occupant seat section may further include a floor panel on which feet of the occupant seated on the seat are placed. The detection unit may further include a load sensor provided on the floor panel and configured to detect the load information related to a load applied to the floor panel.
   In the system of this aspect, the detection unit includes the load sensor provided on the floor panel and configured to detect the load information related to the load applied to the floor panel. It is therefore possible to verify whether the inspection was performed with an appropriate load applied to the floor panel.
(4) In the system of the above aspect, the detection unit may include an imaging device configured to capture an image of the occupant seat section. The detection unit may be configured to detect, from image data obtained from the imaging device, the load information related to the load applied to the occupant seat section.
   In the system of this aspect, the detection unit includes the imaging device configured to capture an image of the occupant seat section, and the detection unit is configured to detect, from the image data obtained from the imaging device, the load information related to the load applied to the occupant seat section. It is therefore possible to detect the load information using an imaging device mounted in the vehicle or an imaging device installed in a factory.
(5) Another aspect of the present disclosure provides a system. The system includes: an inspection apparatus configured to perform an inspection of a vehicle; a detection unit configured to detect load information related to a load applied to an occupant seat section of the vehicle during the inspection; and an output unit configured to output a result of the inspection by the inspection apparatus when the load information detected by the detection unit meets a predetermined criterion, and configured not to output the result when the load information detected by the detection unit does not meet the predetermined criterion.
   In the system of this aspect, the output unit is configured to output the result of the inspection by the inspection apparatus when the load information detected by the detection unit meets the predetermined criterion, and is configured not to output the result of the inspection when the load information detected by the detection unit does not meet the predetermined criterion. Therefore, by setting appropriate load information as the predetermined criterion, the inspection result can be obtained when the inspection is performed with an appropriate load applied.

The present disclosure can be implemented not only in the above aspects as a system, but also in other aspects such as a vehicle inspection method, a program for implementing the vehicle inspection method, a non-transitory recording medium on which the program is recorded, and a program product. For example, the program product may be provided as a recording medium on which the program is recorded, or as a program product that can be distributed via a network.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram showing the configuration of a system according to a first embodiment;
FIG. 2 is a block diagram showing the configuration of the system;
FIG. 3 is a flowchart illustrating the processing procedure of travel control for a vehicle according to the first embodiment;
FIG. 4 is a flowchart illustrating the procedure of an output process of outputting inspection results and load information;
FIG. 5 illustrates the output process;
FIG. 6 illustrates a system according to a second embodiment;
FIG. 7 is a flowchart illustrating the procedure of an output process according to a third embodiment;
FIG. 8 illustrates a schematic configuration of a system according to a fourth embodiment; and
FIG. 9 is a flowchart illustrating the processing procedure of travel control for a vehicle according to the fourth embodiment.

### DETAILED DESCRIPTION OF EMBODIMENTS

### A. First Embodiment

### Overview of System 50

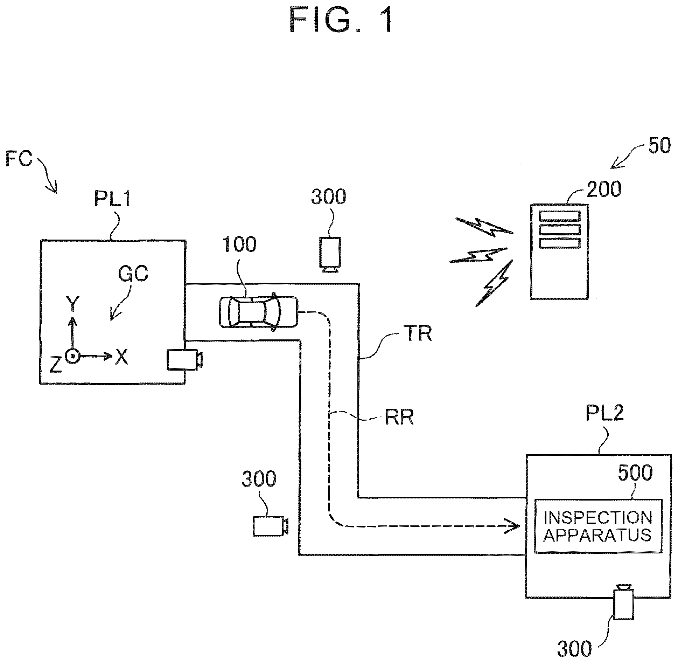

FIG. 1 is a conceptual diagram showing the configuration of a system 50 according to a first embodiment. The system 50 includes one or more vehicles 100 as moving objects, a control device 200, and one or more sensors 300.

In the present disclosure, the term "moving object" means a movable object, and may be, for example, a vehicle or an electric vertical take-off and landing aircraft (a so-called flying vehicle). The vehicle may be a vehicle that travels on wheels or a vehicle that travels on continuous tracks, and may be, for example, a passenger car, a truck, a bus, a two-wheeled vehicle, a four-wheeled vehicle, or a construction vehicle. The vehicle includes a battery electric vehicle (BEV), a gasoline-powered vehicle, a hybrid electric vehicle, and a fuel cell electric vehicle. When the moving object is not a vehicle, the terms "vehicle" and "car" as used herein may be replaced with "moving object," and the term "travel" may be replaced with "move," as appropriate.

In the present embodiment, the vehicle 100 is configured to perform driverless operation. The term "driverless operation" refers to operation that is not based on driving operations by an occupant. The driving operations refer to operations related to at least one of "moving," "turning," and "stopping" the vehicle 100. The driverless operation is achieved through automatic or manual remote control using a device located outside the vehicle 100, or through autonomous control by the vehicle 100 itself. The vehicle 100 that is performing driverless operation may have occupants who do not perform the driving operations. Occupants who do not perform the driving operations include, for example, persons simply seated in the vehicle 100, and persons performing tasks other than the driving operations, such as assembly, inspection, and operation of switches, while being on board the vehicle 100. Operation based on the driving operations by an occupant is sometimes referred to as "manual driving."

In the present specification, the term "remote control" includes "full remote control" in which all operations of the vehicle 100 are completely determined from outside the vehicle 100, and "partial remote control" in which part of the operations of the vehicle 100 is determined from outside the vehicle 100. The term "autonomous control" includes "full autonomous control" in which the vehicle 100 autonomously controls its own operations without receiving any information from devices outside the vehicle 100, and "partial autonomous control" in which the vehicle 100 autonomously controls its operations using information received from devices outside the vehicle 100.

In the present embodiment, the system 50 is used in a factory FC where the vehicle 100 is manufactured. The reference coordinate system of the factory FC is a global coordinate system GC, and any position within the factory FC can be represented by X, Y, and Z coordinates in the global coordinate system GC. The factory FC includes a first location PL1 and a second location PL2. The first location PL1 and the second location PL2 are connected by a travel path TR where the vehicle 100 can travel. The vehicle 100 moves from the first location PL1 to the second location PL2 along the travel path TR by driverless operation. Assembly and various inspections for manufacturing the vehicle 100 are performed at the first location PL1 and the second location PL2.

An inspection apparatus 500 is provided at the second location PL2. After moving to the second location PL2, the vehicle 100 proceeds toward the inspection apparatus 500 by driverless operation. The inspection apparatus 500 performs inspection of the vehicle 100. In the present embodiment, the inspection apparatus 500 performs a braking inspection. The inspection apparatus 500 is equipped with a communication device (not shown), and can communicate with other devices including the vehicle 100 and the control device 200 via wired or wireless communication. The inspection apparatus 500 transmits the inspection results to the control device 200 via the communication device.

A plurality of sensors 300 is installed at the first location PL1 and the second location PL2, and along the travel path TR. The sensors 300 are sensors provided outside the vehicle 100. In the present embodiment, the sensors 300 are sensors configured to capture the vehicle 100 from outside the vehicle 100. Each sensor 300 is equipped with a communication device (not shown), and can communicate with other devices including the vehicle 100 and the control device 200 via wired or wireless communication.

Specifically, each sensor 300 is configured as a camera serving as an imaging unit. The cameras as the sensors 300 capture images of the vehicle 100 and output the captured image data.

### Configuration of System 50

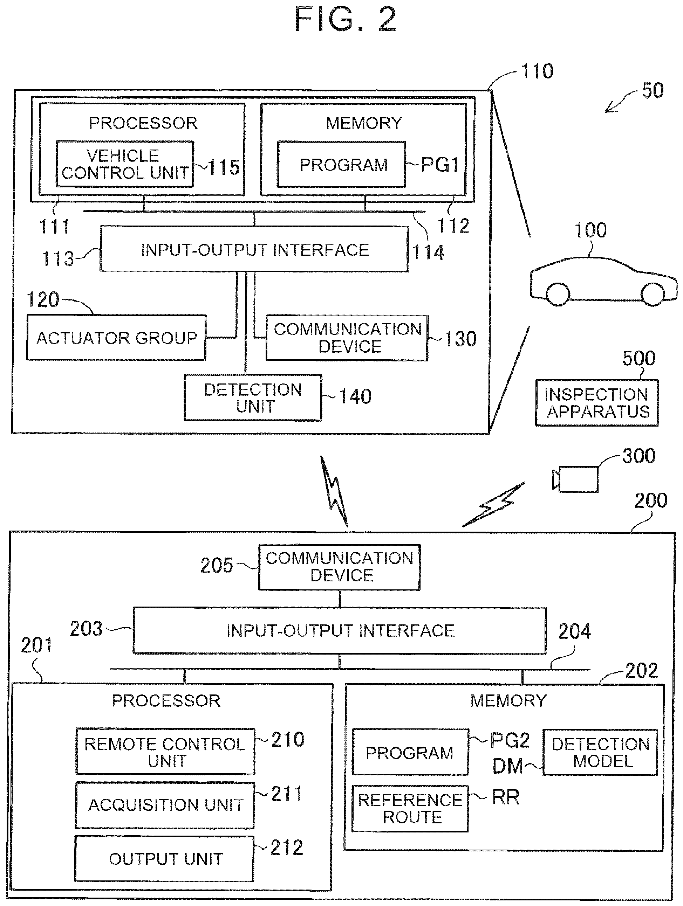

FIG. 2 is a block diagram showing the configuration of the system 50. The vehicle 100 includes a vehicle control device 110 that controls various components of the vehicle 100, an actuator group 120 including one or more actuators that are driven under the control of the vehicle control device 110, and a communication device 130 that communicates with external devices such as the control device 200 via wireless communication. The actuator group 120 includes an actuator of a drive device that accelerates the vehicle 100, an actuator of a steering system that changes the direction of travel of the vehicle 100, and an actuator of a braking device that decelerates the vehicle 100.

The vehicle control device 110 is configured as a computer including a processor 111, a memory 112, an input-output interface 113, and an internal bus 114. The processor 111, the memory 112, and the input-output interface 113 are connected via the internal bus 114 such that they can bidirectionally communicate with each other. The actuator group 120 and the communication device 130 are connected to the input-output interface 113. The processor 111 implements various functions including a function as a vehicle control unit 115 by executing a program PG1 stored in the memory 112.

The vehicle control unit 115 causes the vehicle 100 to travel by controlling the actuator group 120. The vehicle control unit 115 can cause the vehicle 100 to travel by controlling the actuator group 120 using a travel control signal received from the control device 200. The travel control signal is a control signal for causing the vehicle 100 to travel. In the present embodiment, the travel control signal includes, as parameters, the acceleration and steering angle of the vehicle 100. In other embodiments, the travel control signal may include, instead of or in addition to the acceleration of the vehicle 100, the speed of the vehicle 100 as a parameter.

A detection unit 140 detects load information related to a load applied to the occupant seat section of the vehicle 100 during inspection by the inspection apparatus 500. The load information includes the magnitude of the load and the presence or absence of the load. The detection unit 140 transmits the detected load information to the control device 200 via the communication device 130. The detection unit 140 will be described in detail later.

The control device 200 is configured as a computer including a processor 201, a memory 202, an input-output interface 203, and an internal bus 204. The control device 200 is, for example, a server. The processor 201, the memory 202, and the input-output interface 203 are connected via the internal bus 204 such that they can bidirectionally communicate with each other. A communication device 205 that communicates with various devices outside the control device 200 is connected to the input-output interface 203. The communication device 205 can communicate with the vehicle 100 via wireless communication, and can communicate with the sensors 300 via either wired or wireless communication. The processor 201 implements various functions including functions as a remote control unit 210, an acquisition unit 211, and an output unit 212 by executing a program PG2 stored in the memory 202.

The remote control unit 210 acquires detection results from the sensors, generates a travel control signal for controlling the actuator group 120 of the vehicle 100 based on the detection results, and transmits the travel control signal to the vehicle 100 to control the driverless operation of the vehicle 100. In addition to travel control signals, the remote control unit 210 may also generate and output control signals for controlling actuators that operate various auxiliary devices provided in the vehicle 100 and various accessories such as wipers, power windows, and lamps. That is, the remote control unit 210 may operate such various accessories and various auxiliary devices by remote control.

The acquisition unit 211 acquires the results of the inspection performed by the inspection apparatus 500 and the load information detected by the detection unit 140.

The output unit 212 associates the inspection results and the load information acquired by the acquisition unit 211 with each other and output them. The acquisition unit 211 and the output unit 212 will be described in detail later.

### Travel Control of Vehicle 100

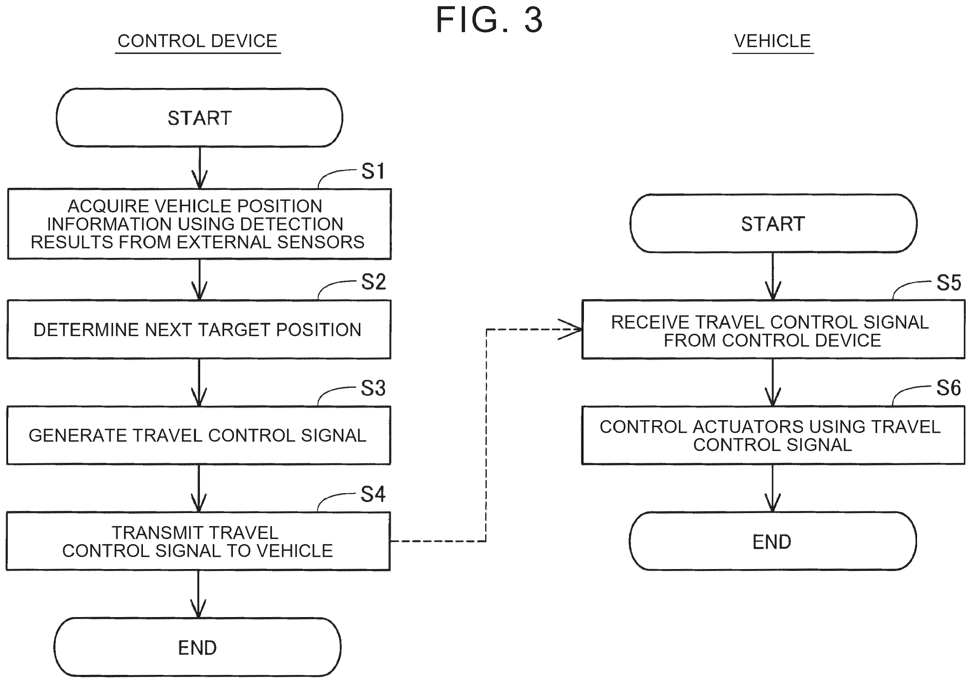

FIG. 3 is a flowchart illustrating the processing procedure of travel control for the vehicle 100 according to the first embodiment. This procedure is executed to cause the vehicle 100 to travel by driverless operation. In the processing procedure of FIG. 3, the processor 201 of the control device 200 functions as the remote control unit 210 by executing the program PG2. The processor 111 of the vehicle 100 functions as the vehicle control unit 115 by executing the program PG1.

In step S1, the processor 201 of the control device 200 acquires vehicle position information using detection results output from the sensors 300. The vehicle position information is position information that serves as a basis for generating a travel control signal. In the present embodiment, the vehicle position information includes the position and orientation of the vehicle 100 in the global coordinate system GC of the factory FC. Specifically, in S1, the processor 201 acquires the vehicle position information using captured images acquired from the sensors 300 that are cameras.

More specifically, in S1, the processor 201 detects, for example, the contour of the vehicle 100 from the captured images, calculates the coordinates of a positioning point of the vehicle 100 in the coordinate system of the captured images, namely a local coordinate system, and converts the calculated coordinates into coordinates in the global coordinate system GC, thereby acquiring the position of the vehicle 100. The contour of the vehicle 100 included in the captured images can be detected by, for example, inputting the captured images into a detection model DM utilizing artificial intelligence. For example, the detection model DM is prepared within or outside the system 50 and is stored in advance in the memory 202 of the control device 200. Examples of the detection model DM include a trained machine learning model trained to perform either semantic segmentation or instance segmentation. For example, a convolutional neural network (hereinafter referred to as "CNN") trained by supervised learning using a training dataset can be used as the machine learning model. The training dataset includes, for example, a plurality of training images including the vehicle 100, and labels indicating, for each region in the training images, whether the region represents the vehicle 100 or a region other than the vehicle 100. During training of the CNN, it is preferable that the parameters of the CNN be updated by backpropagation (error backpropagation) so as to reduce the error between the output result from the detection model DM and the label. The processor 201 can acquire the orientation of the vehicle 100 by, for example, estimating it based on the direction of a motion vector of the vehicle 100 calculated from the displacements of feature points of the vehicle 100 between frames of the captured images using an optical flow method.

In step S2, the processor 201 of the control device 200 determines a target position to which the vehicle 100 should proceed next. In the present embodiment, the target position is represented by X, Y, and Z coordinates in the global coordinate system GC. A reference route RR that defines a path the vehicle 100 should travel is stored in advance in the memory 202 of the control device 200. The route is represented by a node indicating a departure point, nodes indicating waypoints, a node indicating a destination, and links connecting the nodes. The processor 201 determines the target position for the vehicle 100 based on the vehicle position information and the reference route RR. The processor 201 determines the target position on the reference route RR ahead of the current position of the vehicle 100.

In step S3, the processor 201 of the control device 200 generates a travel control signal for causing the vehicle 100 to travel toward the determined target position. The processor 201 calculates the travel speed of the vehicle 100 based on the transition of the position of the vehicle 100, and compares the calculated travel speed and a target speed. Generally, when the travel speed is lower than the target speed, the processor 201 determines an acceleration such that the vehicle 100 accelerates. When the travel speed is higher than the target speed, the processor 201 determines an acceleration such that the vehicle 100 decelerates. When the vehicle 100 is located on the reference route RR, the processor 201 determines a steering angle and an acceleration such that the vehicle 100 does not deviate from the reference route RR. When the vehicle 100 is not located on the reference route RR, that is, when the vehicle 100 has deviated from the reference route RR, the processor 201 determines a steering angle and an acceleration such that the vehicle 100 returns to the reference route RR.

In step S4, the processor 201 of the control device 200 transmits the generated travel control signal to the vehicle 100. The processor 201 repeatedly performs, at a predetermined cycle, the acquisition of vehicle position information, the determination of a target position, the generation of a travel control signal, and the transmission of the travel control signal.

In step S5, the processor 111 of the vehicle 100 receives the travel control signal transmitted from the control device 200. In step S6, the processor 111 of the vehicle 100 controls the actuator group 120 using the received travel control signal, thereby causing the vehicle 100 to travel with the acceleration and steering angle represented by the travel control signal. The processor 111 repeatedly performs, at a predetermined cycle, the reception of the travel control signal and the control of the actuator group 120. With the system 50 of the present embodiment, the vehicle 100 can be made to travel by remote control, and the vehicle 100 can be moved without using transport equipment such as cranes or conveyors.

### Process of Outputting Inspection Results and Load Information

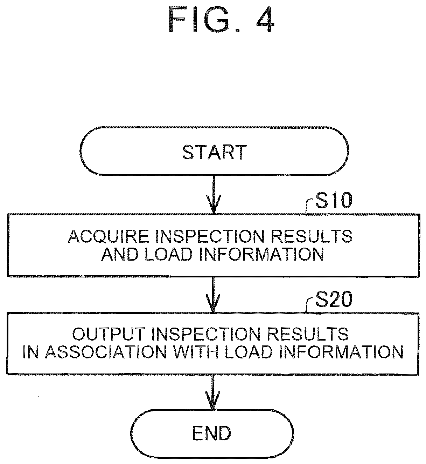

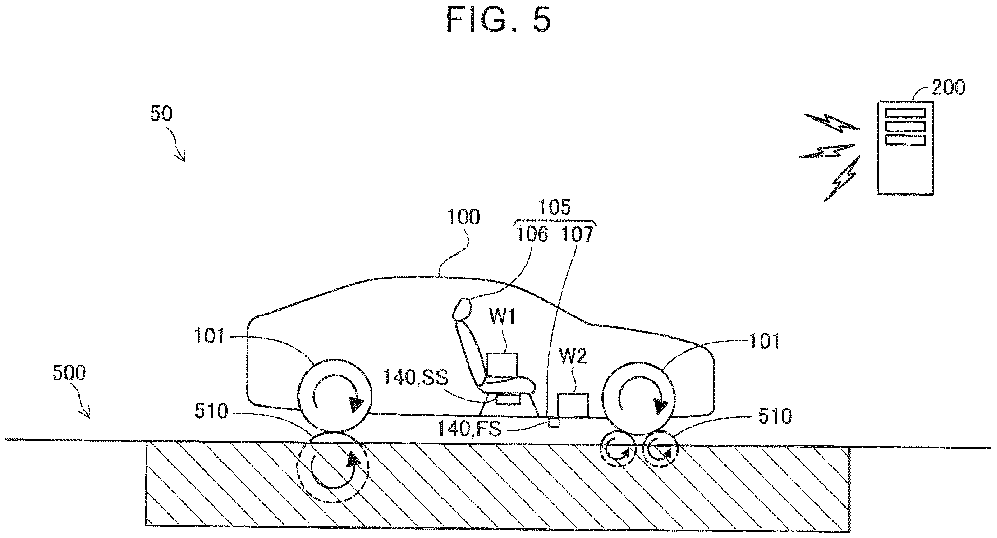

FIG. 4 is a flowchart showing the procedure of a process of outputting inspection results and load information (hereinafter also referred to as "output process"). FIG. 5 illustrates the output process. The output process is executed as one step of the inspection by the inspection apparatus 500. More specifically, the output process is executed to verify whether the inspection was performed with an appropriate load applied.

As shown in FIG. 4, in step S10, the acquisition unit 211 acquires inspection results and load information. In the following, the load information will be described first, and then the inspection results will be described.

As shown in FIG. 5, the vehicle 100 includes an occupant seat section 105. In the present embodiment, the occupant seat section 105 includes a seat 106 on which an occupant of the vehicle 100 is seated, and a floor panel 107 on which the feet of the occupant seated on the seat 106 are placed. A weight W1 is placed on the seat 106. A weight W2 is placed on the floor panel 107. The weight W1 weighs, for example, 40 kg. The weight W2 weighs, for example, 10 kg. In the braking inspection, the inspection results may vary depending on whether an occupant is present in the vehicle 100. Since the vehicle 100 can perform driverless operation, the weights W1, W2 are placed in the vehicle 100 instead of an occupant. This allows the load to be applied to the vehicle 100 even when no occupant is present after the vehicle 100 has moved to the inspection apparatus 500 by driverless operation.

The vehicle 100 includes, as the detection unit 140, a seat sensor SS and a load sensor FS. The seat sensor SS is provided below the seating surface of the seat 106. The seat sensor SS detects, as load information, the magnitude of the load applied to the seat 106. The load sensor FS is provided on the underside of the floor panel 107. The load sensor FS detects, as load information, the magnitude of the load applied to the floor panel 107. The seat sensor SS and the load sensor FS output the detected load magnitudes to the acquisition unit 211 of the control device 200. In the present embodiment, the seat sensor SS outputs that the magnitude of the load applied to the seat 106 is 40 kg, and the load sensor FS outputs that the magnitude of the load applied to the floor panel 107 is 10 kg. Accordingly, the acquisition unit 211 acquires, as load information, the magnitude of the load applied to the seat 106 and the magnitude of the load applied to the floor panel 107.

The inspection apparatus 500 includes a plurality of rollers 510. With each wheel 101 of the vehicle 100 supported by a corresponding one of the rollers 510, the inspection apparatus 500 rotationally drives the rollers 510, thereby causing the wheels 101 to rotate passively. In the braking inspection, since the peripheral speed of the rotationally driven rollers 510 and the peripheral speed of the passively rotating wheels 101 are equal, the position of the vehicle 100 in its front-rear direction does not change. The inspection apparatus 500 controls the rollers 510 such that the rotational speed of the rollers 510 reaches a predetermined target rotational speed. When the rotational speed of the rollers 510 reaches the target rotational speed, the remote control unit 210 remotely controls the vehicle 100 to activate the braking device of the vehicle 100, and the inspection apparatus 500 stops rotationally driving the rollers 510. The inspection apparatus 500 detects the braking force applied from the braking device of the vehicle 100 to the rollers 510 using a braking force sensor. The inspection apparatus 500 outputs, as the inspection results, the detected braking force to the acquisition unit 211 of the control device 200. The inspection results include information regarding whether the braking system of the vehicle 100 operated properly. The acquisition unit 211 thus acquires the inspection results.

As shown in FIG. 4, in step S20, the output unit 212 outputs the inspection results in association with the load information. In the present embodiment, the output unit 212 outputs, in combination, the braking force detected by the inspection apparatus 500, the magnitude of the load detected by the seat sensor SS, and the magnitude of the load detected by the load sensor FS. For example, the output may be performed via a speaker or a display device.

When the output process shown in FIG. 4 is completed, an inspector checks the output information. When the output information meets inspection criteria, the vehicle 100 moves from the second location PL2 by driverless operation, and other inspection processes etc. are executed. When the output information does not meet the inspection criteria, adjustments or other operations are performed on the vehicle 100.

In the system 50 of the first embodiment described above, the output unit 212 outputs the results of the inspection by the inspection apparatus 500 in association with the load information detected by the detection unit 140. It is therefore possible to verify whether the inspection was performed with an appropriate load applied.

In the system 50 of the first embodiment, the detection unit 140 includes the seat sensor SS provided in the seat 106. It is therefore possible to verify whether the inspection was performed with an appropriate load applied to the seat 106.

In the system 50 of the first embodiment, the detection unit 140 includes the load sensor FS provided on the floor panel 107. It is therefore possible to verify whether the inspection was performed with an appropriate load applied to the floor panel 107.

### B. Second Embodiment

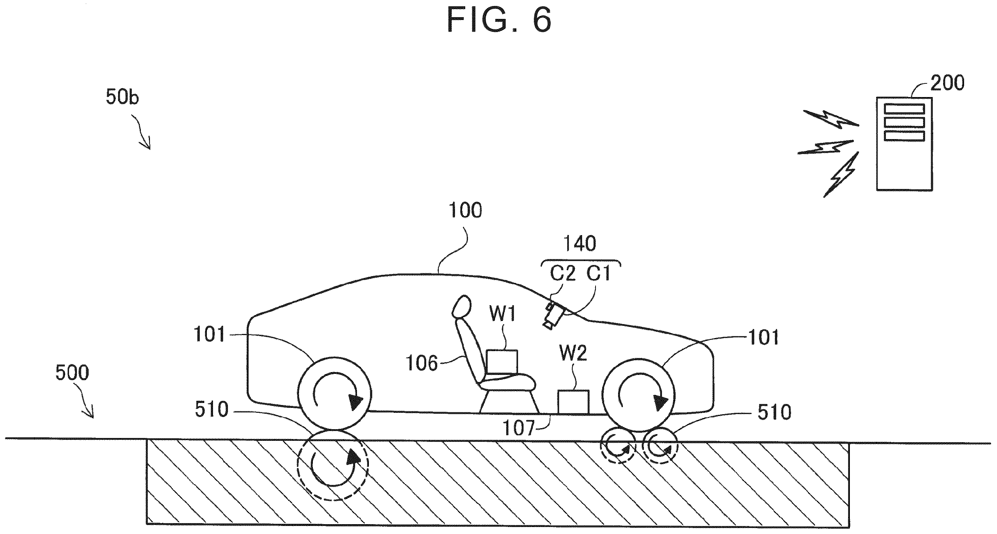

FIG. 6 illustrates a system 50b according to a second embodiment. The detection unit 140 in the system 50b of the second embodiment is different from that in the system 50 of the first embodiment in that it includes an imaging device C1 and a processing device C2 instead of the seat sensor SS and the load sensor FS. Since the configuration of the system 50b of the second embodiment is otherwise the same as that of the system 50 of the first embodiment, description thereof will be omitted.

As shown in FIG. 6, the vehicle 100 includes, as the detection unit 140, the imaging device C1 and the processing device C2. The imaging device C1 captures an image of the occupant seat section 105 and outputs the captured image data. More specifically, the imaging device C1 captures images of the weight W1 placed on the seat 106 and the weight W2 placed on the floor panel 107. The imaging device C1 in the present embodiment is a camera configured to capture an image of the interior of a vehicle cabin.

The processing device C2 detects load information related to the load applied to the occupant seat section 105 from the image data. The processing device C2 is configured as a computer including a processor and a memory. In the present embodiment, the load information represents the presence or absence of a load. That is, the processing device C2 detects whether the weights W1, W2 are included in the image data. This detection is performed by, for example, pattern matching using image data of the weights W1, W2 stored in advance in the memory and the image data output from the imaging device C1. Detection of the presence or absence of a load may alternatively be performed using any image processing technique other than pattern matching. The processing device C2 outputs the detection results regarding the presence or absence of a load to the acquisition unit 211 of the control device 200. The acquisition unit 211 acquires the inspection results from the inspection apparatus 500 and the presence or absence of a load output from the processing device C2. The output unit 212 outputs the inspection results acquired by the acquisition unit 211 in association with the presence or absence of a load.

In the system 50b of the second embodiment described above, the detection unit 140 includes the imaging device C1 that captures an image of the occupant seat section 105, and the processing device C2 that detects, from the image data acquired from the imaging device C1, load information related to the load applied to the occupant seat section 105. It is therefore possible to detect the load information using the imaging device C1 provided in the vehicle 100.

### C. Third Embodiment

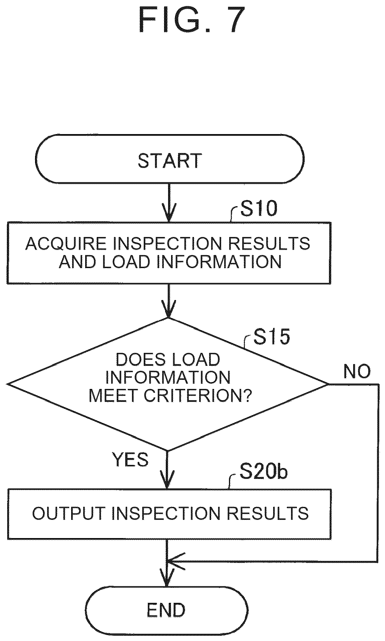

FIG. 7 is a flowchart illustrating the procedure of an output process according to a third embodiment. A system of the third embodiment is different from the system 50 of the first embodiment in the function of the output unit 212. The components that are not described below are the same as those of the system 50 of the first embodiment. The system of the third embodiment may be used in combination with the system 50b of the second embodiment.

In the third embodiment, the output unit 212 outputs the results of the inspection by the inspection apparatus 500 when the load information detected by the detection unit 140 meets a predetermined criterion. The output unit 212 does not output the inspection results when the load information detected by the detection unit 140 does not meet the predetermined criterion. The predetermined criterion is, for example, a lower limit value of an appropriate load magnitude for the inspection performed by the inspection apparatus 500. Alternatively, the predetermined criterion may be any specified range of load magnitudes. The predetermined criterion may be the presence of any load. The predetermined criterion is stored in advance in the memory 202.

The flowchart shown in FIG. 7 is different from the flowchart shown in FIG. 4 in step S15 and the subsequent steps, while step S10 is the same. Step S15 and the subsequent steps in FIG. 7 will be described below.

In step S15, the output unit 212 determines whether the load information acquired by the acquisition unit 211 meets a predetermined criterion. When the load information does not meet the predetermined criterion (step S15: NO), the output unit 212 ends the process without outputting the inspection results. When the load information meets the predetermined criterion (step S15: YES), the output unit 212 outputs the inspection results (step S20b). In step S20 in the first embodiment, the output unit 212 outputs the inspection results in association with the load information. However, in step S20b in the third embodiment, the output unit 212 outputs the inspection results.

In the system 50 of the third embodiment described above, the output unit 212 outputs the results of the inspection by the inspection apparatus 500 when the load information detected by the detection unit 140 meets the predetermined criterion. The output unit 212 does not output the inspection results when the load information detected by the detection unit 140 does not meet the predetermined criterion. Therefore, by setting appropriate load information as the predetermined criterion, the inspection results can be obtained when the inspection is performed with an appropriate load applied.

### D. Fourth Embodiment

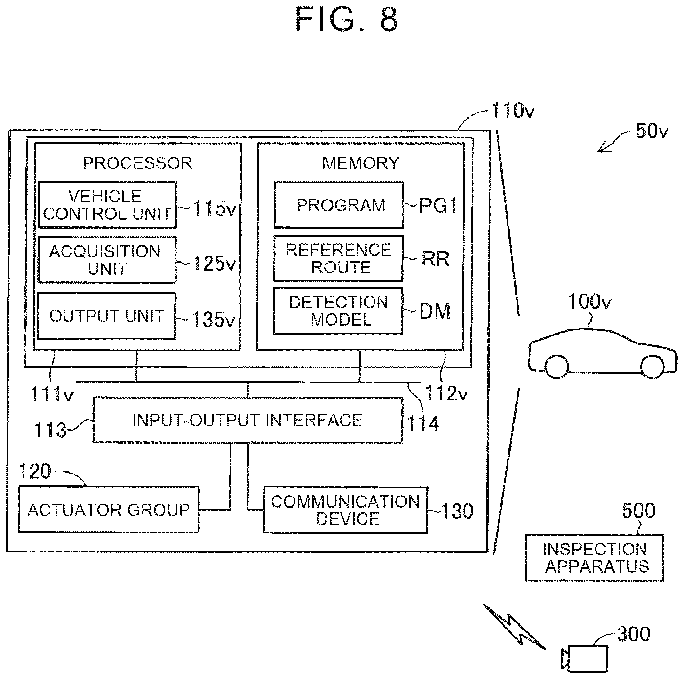

FIG. 8 illustrates a schematic configuration of a system 50v according to a fourth embodiment. The present embodiment is different from the first embodiment in that the system 50v does not include the control device 200. A vehicle 100v according to the present embodiment is configured to travel through autonomous control executed by the vehicle 100v itself. The other configuration of the fourth embodiment is the same as that of the first embodiment unless otherwise specified. The system 50v of the fourth embodiment may be used in combination with the systems of the second and third embodiments.

In the present embodiment, a processor 111v of a vehicle control device 110v functions as a vehicle control unit 115v by executing the program PG1 stored in a memory 112v. The vehicle control unit 115v can cause the vehicle 100v to travel through autonomous control by acquiring output results from the sensors, generating a travel control signal using the output results, and outputting the generated travel control signal to operate the actuator group 120. In the present embodiment, in addition to the program PG1, the detection model DM and the reference route RR are stored in advance in the memory 112v.

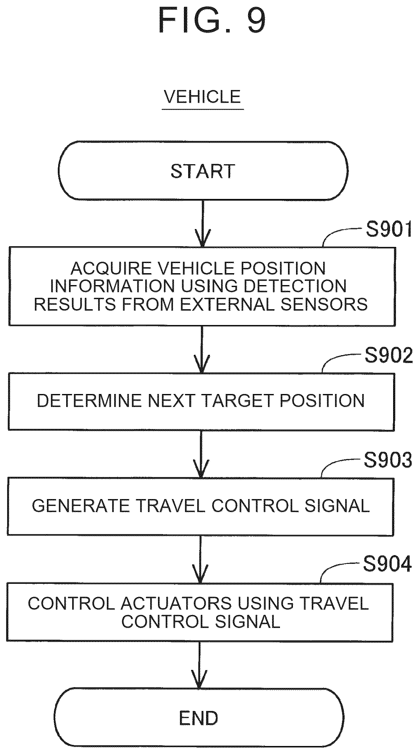

FIG. 9 is a flowchart illustrating the processing procedure of travel control for the vehicle 100v according to the fourth embodiment. In the processing procedure of FIG. 9, the processor 111v of the vehicle 100v functions as the vehicle control unit 115v by executing the program PG1.

In step S901, the processor 111v of the vehicle control device 110v acquires vehicle position information using detection results output from the sensors 300 that are cameras. In step S902, the processor 111v determines a target position to which the vehicle 100v should proceed next. In step S903, the processor 111v generates a travel control signal for causing the vehicle 100v to travel toward the determined target position. In step S904, the processor 111v controls the actuator group 120 using the generated travel control signal, thereby causing the vehicle 100v to travel according to parameters represented by the travel control signal. The processor 111v repeatedly performs, at a predetermined cycle, the acquisition of vehicle position information, the determination of a target position, the generation of a travel control signal, and the control of the actuators. With the system 50v according to the present embodiment, the vehicle 100v can be caused to travel through autonomous control by the vehicle 100v, without being remotely controlled by the control device 200.

As shown in FIG. 8, the processor 111v of the present embodiment also functions as an acquisition unit 125v and an output unit 135v by executing the program PG1 stored in the memory 112v. The acquisition unit 125v has the same function as the acquisition unit 211 of the first embodiment. The output unit 135v has the same function as the output unit 212 of the first or third embodiment. Therefore, in the present embodiment, the same process as the output process shown in FIG. 4 or 7 is executed by the processor 111v of the vehicle 100v.

Like the systems 50, 50b of the first, second, and third embodiments, the system 50v of the fourth embodiment described above can also execute the travel control and the output process for the vehicle 100v.

### E. Other Embodiments

(E1) Each of the above embodiments illustrates an example in which the inspection apparatus 500 performs a braking inspection. However, the present disclosure is not limited to this. The inspection apparatus 500 may perform any type of inspection. For example, the inspection may be a side slip inspection or an accelerator inspection.

(E2) In each of the above embodiments, at least one of the functions of the acquisition unit 211 and the output unit 212 may be performed by the inspection apparatus 500. In this configuration, the inspection apparatus 500 includes a computer that includes a processor and a memory.

(E3) In each of the above embodiments, the vehicle 100 is controlled through driverless operation. However, the present disclosure is not limited to this. The vehicle 100 may alternatively be controlled through manual driving.

(E4) In each of the above embodiments, the load is applied to the occupant seat section 105 by the weights W1, W2. However, the present disclosure is not limited to this. The load may alternatively be applied by an occupant. In such a configuration, in the system 50 of the first embodiment, the seat sensor SS and the load sensor FS can detect a load applied to the seat 106 and the floor panel 107, in the same manner as when the weights W1, W2 are used. In the system 50b of the second embodiment, the imaging device C1 can capture an image of an occupant seated in the occupant seat section 105, and the processing device C2 can detect the presence or absence of a load using the image data of the occupant seated in the occupant seat section 105.

(E5) In each of the above embodiments, the detection unit 140 may detect load information for any seat. The seat is, for example, a driver's seat, a passenger seat, or a rear seat.

(E6) In the first embodiment, the detection unit 140 includes both the seat sensor SS and the load sensor FS. However, the present disclosure is not limited to this. The detection unit 140 may alternatively be either the seat sensor SS or the load sensor FS.

(E7) In the second embodiment, the imaging device C1 is provided in the vehicle 100. However, the present disclosure is not limited to this. The imaging device C1 may alternatively be provided outside the vehicle 100. For example, the imaging device C1 may be provided in the factory FC.

(E8) In the second embodiment, the imaging device C1 is a camera. However, the present disclosure is not limited to this. The imaging device C1 may be, for example, a ranging device. The ranging device is, for example, a light detection and ranging (LiDAR) device. In such a case, the imaging device C1 may output three-dimensional point cloud data.

(E9) In the second embodiment, each of the weights W1, W2 may be provided with a marker indicating the magnitude of the load. Each marker may have any external shape that can be imaged by the imaging device C1. For example, the weight W1 may be marked with a circle indicating that it weighs 40 kg, and the weight W2 may be marked with a square indicating that it weighs 10 kg. The processing device C2 may detect the magnitude of the load applied to the occupant seat section 105 using such markers.

(E10) In the second embodiment, the detection of the load information by the processing device C2 may instead be performed by the processor 111 of the vehicle 100 or by the processor 201 of the control device 200. Alternatively, the detection of the load information by the processing device C2 may be performed by a processor included in the inspection apparatus 500. In such a configuration, the processing device C2 may be omitted.

(E11) In the third embodiment, the output unit 212 outputs the inspection results. However, the present disclosure is not limited to this. The output unit 212 may output the load information together with the inspection results.

(E12) The output unit 212 may output at least the results of the inspection performed by the inspection apparatus 500, when a predetermined condition regarding the load information is satisfied. The predetermined condition includes, for example, that a load has been detected, that the load meets a predetermined criterion, or that the magnitude of the load is within a predetermined range. The predetermined condition is stored in the memory 202. For example, when the predetermined condition that a load has been detected is satisfied, the output unit 212 outputs the inspection results in association with the load information detected by the detection unit 140. Alternatively, when the predetermined condition that the load meets the predetermined criterion is satisfied, the output unit 212 outputs the results of the inspection performed by the inspection apparatus 500. When the predetermined condition that the load meets the predetermined criterion is not satisfied, the output unit 212 does not output the inspection results. With this configuration as well, it is possible to verify that the inspection was performed with an appropriate load applied.

### F. Still Other Embodiments

(F1) In each of the above embodiments, the sensors 300 are not limited to cameras, and may be, for example, ranging devices. The ranging devices are, for example, LiDAR devices. In such a case, the detection results output from the sensors 300 may be three-dimensional point cloud data representing the vehicle 100. In this case, the control device 200 and the vehicle 100 may acquire the vehicle position information by performing template matching using the three-dimensional point cloud data as the detection results and reference point cloud data prepared in advance.

(F2) In the first embodiment, the control device 200 executes the processes from the acquisition of vehicle position information to the generation of a travel control signal. Alternatively, the vehicle 100 may execute at least part of the processes from the acquisition of vehicle position information to the generation of a travel control signal. For example, the following aspects (1) to (3) may be adopted.

(1) The control device 200 may acquire vehicle position information, determine a target position to which the vehicle 100 should proceed next, and generate a route from the current location of the vehicle 100 represented by the acquired vehicle position information to the target position. The control device 200 may generate a route to the target position located between the present location and the destination, or may generate a route to the destination. The control device 200 may transmit the generated route to the vehicle 100. The vehicle 100 may generate a travel control signal such that the vehicle 100 travels along the route received from the control device 200, and control the actuator group 120 using the generated travel control signal.

(2) The control device 200 may acquire vehicle position information and transmit the acquired vehicle position information to the vehicle 100. The vehicle 100 may determine a target position to which the vehicle 100 should proceed next, generate a route from the current location of the vehicle 100 represented by the received vehicle position information to the target position, generate a travel control signal such that the vehicle 100 travels along the generated route, and control the actuator group 120 using the generated travel control signal.

(3) In the above aspects (1), (2), an internal sensor may be mounted in the vehicle 100, and detection results output from the internal sensor may be used in at least one of the generation of a route and the generation of a travel control signal. The internal sensor is a sensor mounted in the vehicle 100. Examples of the internal sensor may include a sensor that detects the motion state of the vehicle 100, a sensor that detects the operational state of various components of the vehicle 100, and a sensor that detects the surroundings of the vehicle 100. Specific examples of the internal sensor may include a camera, a LiDAR sensor, a millimeter-wave radar, an ultrasonic sensor, a Global Positioning System (GPS) sensor, an acceleration sensor, and a gyro sensor. For example, in the above aspect (1), the control device 200 may acquire detection results from the internal sensor, and generate a route that reflects the detection results from the internal sensor. In the above aspect (1), the vehicle 100 may acquire detection results from the internal sensor, and generate a travel control signal that reflects the detection results from the internal sensor. In the above aspect (2), the vehicle 100 may acquire detection results from the internal sensor, and generate a route that reflects the detection results from the internal sensor. In the above aspect (2), the vehicle 100 may acquire detection results from the internal sensor, and generate a travel control signal that reflects the detection results from the internal sensor.

(F3) In the fourth embodiment, an internal sensor may be mounted in the vehicle 100v, and detection results output from the internal sensor may be used in at least one of the generation of a route and the generation of a travel control signal. For example, the vehicle 100v may acquire detection results from the internal sensor, and generate a route that reflects the detection results from the internal sensor. The vehicle 100v may acquire detection results from the internal sensor, and generate a travel control signal that reflects the detection results from the internal sensor.

(F4) In the fourth embodiment, the vehicle 100v acquires vehicle position information using the detection results from the sensors 300. Alternatively, an internal sensor may be mounted in the vehicle 100v. The vehicle 100v may acquire vehicle position information using detection results from the internal sensor, determine a target position to which the vehicle 100v should proceed next, generate a route from the current location of the vehicle 100v represented by the acquired vehicle position information to the target position, generate a travel control signal for causing the vehicle 100v to travel along the generated route, and control the actuator group 120 using the generated travel control signal. In this case, the vehicle 100v can travel without using the detection results from the sensors 300. The vehicle 100v may acquire a target arrival time and traffic congestion information from outside the vehicle 100v, and reflect the target arrival time or the traffic congestion information in at least one of a route and a travel control signal.

(F5) In the first embodiment, the control device 200 automatically generates a travel control signal to be transmitted to the vehicle 100. Alternatively, the control device 200 may generate a travel control signal to be transmitted to the vehicle 100 in accordance with an operation performed by an external operator located outside the vehicle 100. For example, the external operator may operate a manipulation device that includes: a display for displaying captured images output from the sensors 300; a steering wheel, accelerator pedal, and brake pedal for remotely operating the vehicle 100; and a communication device for communicating with the control device 200 via wired or wireless communication. The control device 200 may generate a travel control signal based on an operation performed on the manipulation device.

(F6) In each of the above embodiments, the vehicle 100 may have any configuration as long as it can move through driverless operation. For example, the vehicle 100 may be in the form of a platform equipped with components described below. Specifically, the vehicle 100 may have any configuration as long as it includes at least the vehicle control device 110 and the actuator group 120 in order to implement the three functions, namely "moving," "turning," and "stopping," through driverless operation. In a case where the vehicle 100 acquires information from the outside for driverless operation, the vehicle 100 may further include the communication device 130. That is, at least part of interior components such as a driver's seat and a dashboard, at least part of exterior components such as bumpers and fenders, or a body shell may be omitted from the vehicle 100 that can move through driverless operation. In this case, the remaining components such as the body shell may be mounted on the vehicle 100 before the vehicle 100 is shipped from the factory FC. Alternatively, the remaining component such as the body shell may be mounted on the vehicle 100 after the vehicle 100 is shipped from the factory FC without having the remaining components such as the body shell mounted thereon. The components may be mounted on the vehicle 100 from any direction such as from the upper, lower, front, rear, right, or left side. The components may be mounted from the same direction or from different directions. Even in the form of a platform, the position may be determined in the same manner as for the vehicle 100 according to the first embodiment.

(F7) The vehicle 100 may be manufactured by combining a plurality of modules. A module refers to a unit composed of one or more components grouped according to the structure and function of the vehicle 100. For example, the platform of the vehicle 100 may be manufactured by combining a front module that constitutes the front portion of the platform, a central module that constitutes the central portion of the platform, and a rear module that constitutes the rear portion of the platform. The number of modules constituting the platform is not limited to three, and may be two or fewer, or four or more. In addition to or instead of the platform, part of the vehicle 100 other than the platform may be modularized. The various modules may include any exterior component such as a bumper or a grille, or any interior component such as a seat or a console. Not only the vehicle 100 but also moving objects in any aspect may be manufactured by combining a plurality of modules. For example, such modules may be manufactured by joining a plurality of components by welding, fasteners, etc., or may be manufactured by integrally molding at least part of a module as a single component by casting. The molding technique of integrally molding at least part of a module as a single component is also referred to as gigacasting or megacasting. By using gigacasting, each part of a moving object that was conventionally formed by joining a plurality of components can be formed as a single component. For example, the front module, the central module, and the rear module may be manufactured by gigacasting.

(F8) Transport of the vehicle 100 through driverless operation of the vehicle 100 is called "self-propelled transport." A configuration for implementing self-propelled transport is also referred to as "vehicle remote-control autonomous driving transport system." A method for producing the vehicle 100 using self-propelled transport is also referred to as "self-propelled production." In self-propelled production, for example, at least part of the transport of the vehicle 100 in the factory FC where the vehicle 100 is manufactured is implemented through self-propelled transport.

(F9) In each of the above embodiments, part or all of the functions and processes implemented by software may be implemented by hardware. Part or all of the functions and processes implemented by hardware may be implemented by software. Examples of the hardware that implements the various functions in the above embodiments may include various circuits such as integrated circuits and discrete circuits.

The present disclosure is not limited to the above embodiments, and can be implemented by a variety of configurations without departing from the spirit and scope of the present disclosure. For example, the technical features in each embodiment corresponding to the technical features in each aspect described in "SUMMARY OF THE INVENTION" can be replaced or combined as appropriate in order to solve part or all of the above issues or achieve part or all of the above effects. When the technical features are not described as being essential herein, such features can be omitted as appropriate.

## Claims

1. A system comprising:
an inspection apparatus configured to perform an inspection of a vehicle;
a detection unit configured to detect load information related to a load applied to an occupant seat section of the vehicle during the inspection; and
an output unit configured to output a result of the inspection by the inspection apparatus in association with the load information detected by the detection unit.

2. The system according to claim 1, wherein:
the occupant seat section includes a seat on which an occupant of the vehicle is seated; and
the detection unit includes a seat sensor provided in the seat, the seat sensor being configured to detect the load information related to a load applied to the seat.

3. The system according to claim 2, wherein:
the occupant seat section further includes a floor panel on which feet of the occupant seated on the seat are placed; and
the detection unit further includes a load sensor provided on the floor panel, the load sensor being configured to detect the load information related to a load applied to the floor panel.

4. The system according to claim 1, wherein:
the detection unit includes an imaging device configured to capture an image of the occupant seat section; and
the detection unit is configured to detect, from image data obtained from the imaging device, the load information related to the load applied to the occupant seat section.

5. A system comprising:
an inspection apparatus configured to perform an inspection of a vehicle;
a detection unit configured to detect load information related to a load applied to an occupant seat section of the vehicle during the inspection; and
an output unit configured to output a result of the inspection by the inspection apparatus when the load information detected by the detection unit meets a predetermined criterion, and configured not to output the result when the load information detected by the detection unit does not meet the predetermined criterion.
